# EUROPEAN PATENT SPECIFICATION

(11) **EP 0 789 195 B1**
(45) Date of publication and mention of the grant of the patent: **10.12.2003**
(21) Application number: 97300477.3
(22) Date of filing: 27.01.1997
(51) Int. Cl.: F23R 3/04, F04D 29/54

(54) **Tri-passage diffuser for a gas turbine**
Dreikanaldiffusor für Gasturbinentriebwerk
Diffuseur à troi passages pour turbine à gaz

(30) Priority: 09.02.1996 US 598885
(43) Date of publication of application: 13.08.1997
(73) Proprietor: GENERAL ELECTRIC COMPANY, Schenectady, NY 12345 (US)
(72) Inventor: Lin, Edward J. C., Schenectady, New York 12306 (US); Warren, Richard Edwin, Jr., Schenectady, New York 12306 (US); Vandervort, Christian L., Voorheesville, New York 12186 (US)
(74) Representative: Goode, Ian Roy

(56) References cited:
- EP-A- 0 651 207
- DE-A- 2 836 539
- FR-A- 2 245 855
- US-A- 5 077 967
- US-A- 5 335 501

## Description

This invention relates generally to gas turbines and specifically to a diffuser at the gas turbine compressor discharge.

Conventional gas turbine combustion systems employ multiple combustion chamber assemblies to achieve reliable and efficient turbine operation. Each combustion chamber includes a cylindrical combustor, a fuel injection system, and a transition piece that guides the flow of the hot gas from the combustor to the inlet of the turbine. Generally, a portion of ;the compressor discharge air is introduced directly into the combustor reaction zone to be mixed with the fuel and bumed. The balance of the airflow serves either to quench the flame prior to the combustor discharge entering the turbine, or to cool the wall of the combustor and, in some cases, the transition piece.

In systems incorporating impingement cooled transition pieces, a hollow sleeve surrounds the transition piece, and the sleeve wall is perforated so that compressor discharge air will flow through the cooling apertures in the sleeve wall and impinge upon (and thus cool) the transition piece.

Because the transition piece is a structural member, it is desirable to have lower temperatures where the stresses are highest. This has proven difficult to achieve, but an acceptable compromise is to have uniform temperatures (at which the stresses are within allowable limits) all along the length of the transition piece. Thus, uniform flow pressures along the impingement sleeve are necessary to achieve the desired uniform temperatures.

Substantially straight axial diffusers are typically utilized in gas turbines at the compressor discharge location. If a passage diffuser occupies a large space in the mid-section of the machine, however, its ability to uniformly distribute flow is limited. In fact, for gas turbines having impingement cooled transition pieces, tests have shown severe transition piece temperature variations plus large impingement sleeve static pressure variations with the one-passage axial diffuser design. There has been at least one attempt in the gas turbine industry to utilize a curved diffuser to divert flow in a radial direction, (not in a system using impingement cooling of the transition piece), but the diffuser was formed to include only a single passage, so that uniform flow along the axial extent of the impingement sleeve was not achieved.

Some attempts have been made to use multiple passages such as shown in US 5335501 and DE 2836539.

The present invention seeks to remedy the problems in the prior art by achieving a more uniform transition piece region flow to thereby maximize gas turbine output. At the same time, the invention permits the gas turbine rotor length to be minimized for rotor dynamic reasons, and the gas turbine length in general to be minimized to achieve additional cost savings as well.

According to a first aspect of the invention, there is provided a compressor discharge diffuser for directing flow from a compressor directly towards a transition piece between a combustor and a turbine stage in a gas turbine wherein the compressor discharge diffuser comprises:
an internal casing defining a pair of outer diffuser walls flaring outwardly in a direction of compressor discharge air flow;
a pair of baffles within a flow area defined by said pair of outer diffuser walls which divide said flow area between said pair of outer diffuser walls into three discrete flow passages, one of said three passages diverting the compressor discharge flow substantially radially.

Thus, in one embodiment, a flared exit passage at the compressor discharge is divided into three separate passages through the use of two baffles located within the discharge. While the outer walls of the discharge flare outwardly, the design of the baffles results in a cross sectional flow area for each channel which is substantially the same. This arrangement insures stable flow while at the same time provides more efficient and uniform distribution flow within the transition piece region to insure the desired uniform impingement cooling of the transition piece.

In accordance with another aspect of the invention, there is provided in a gas turbine having a transition region between a combustor and turbine stage including a transition piece duct extending between a combustor liner and the turbine stage; an impingement sleeve surrounding the transition piece, the impingement sleeve having a plurality of cooling apertures therein; and a compressor diffuser as referred to above directing compressor discharge air into the transition region; the improvement wherein the diffuser includes a first passage shaped to direct compressor discharge air flow at least in a radial direction.

An embodiment of the invention will now be described, by way of example, with reference to the accompanying drawings, in which:-
FIGURE 1 is a schematic cross section of a conventional axial compressor diffuser at the compressor discharge within a gas turbine incorporating an impingement cooled transition piece; and
FIGURE 2 is a cross sectional view of a tri-passage diffuser in accordance with this invention.

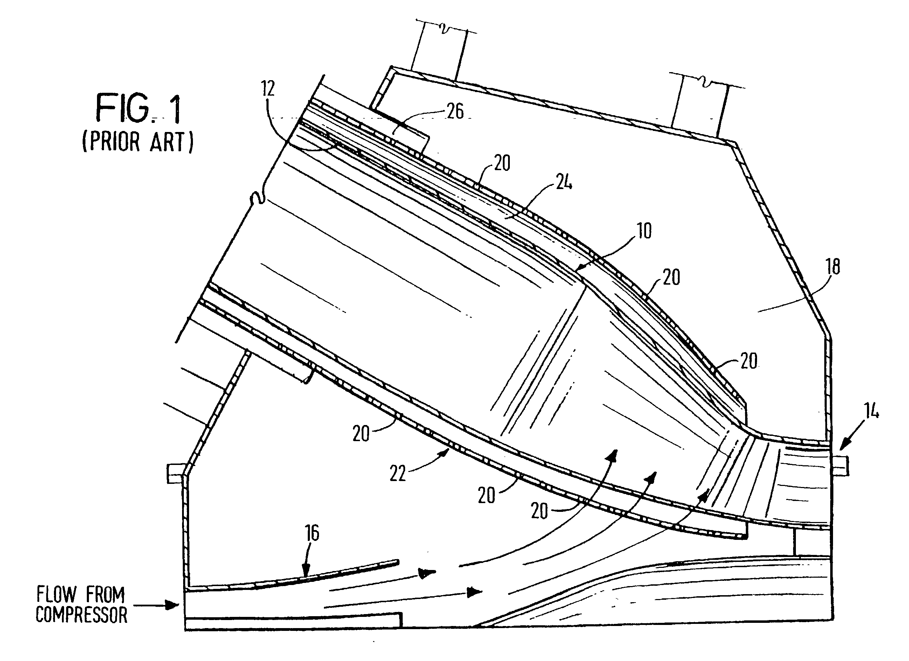

Turning to Figure 1, a typical gas turbine includes a transition piece 10 by which the hot combustion gases from a combustor upstream of the combustion liner 12 are passed to the first stage of a turbine represented at 14. Flow from the gas turbine compressor exits an axial diffuser 16 and enters into a transition region 18. About 50% of the compressor discharge air passes through apertures 20 formed along and about an impingement sleeve 22 for flow in an annular region 24 between the transition piece 10 and the impingement sleeve 22. The remaining approximately 50% of the compressor discharge flow passes into the flow sleeve 26 and eventually mixes with gas turbine fuel in the combustor.
As indicated by the flow arrows shown in Figure 1, the compressor discharge flow in the conventional arrangement tends to be non-uniform and can result in significant transition piece temperature variations and significant impingement sleeve static pressure variations, as well as having a negative impact on gas turbine output.

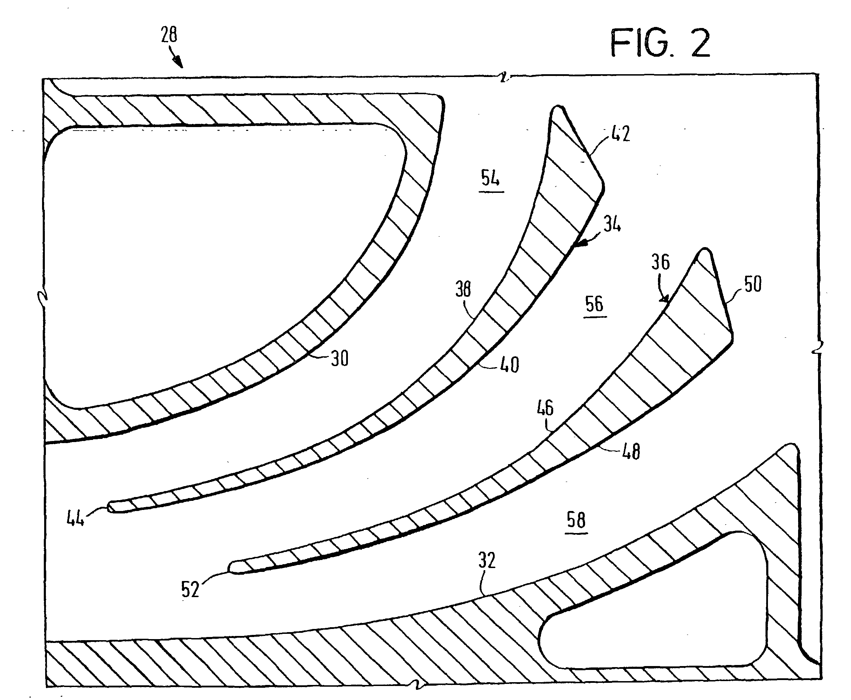

Turning to Figure 2, a tri-passage diffuser 28 in accordance with this invention is shown in section, it being understood that the diffuser shown in the Figure is intended to replace the diffuser 16 shown in Figure 1. This tri-passage diffuser 28 diverts the compressor discharge air stream into different radial and axial directions, toward the mid-section of the gas turbine transition region 18. Specifically, the diffuser 28 is defined by outwardly flaring (in the flow direction) outer walls 30 and 32 and a pair of interior baffles 34 and 36. The baffle 34 includes a pair of curved wall sections 38 and 40 which also taper outwardly in the flow direction and are connected by a downstream end wall 42. Wall sections 38, 40 are connected at an upstream end by a rounded edge 44. Similarly, the baffle 36 includes tapered walls 46 and 48 connected by a downstream end wall 50 and an upstream edge 52.

As can be seen from Figure 2, the baffles 34 and 36 in conjunction with diffuser outer walls 30 and 32, form three diffuser passages 54, 56 and 58. The curvature of the diffuser walls 30 and 32 and the configuration of the baffles 34 and 36 are carefully chosen to insure that the flow area for each of the passages 54, 57 and 58 is substantially the same. At the same time, however, it can be seen that the flow is in three distinct directions. More specifically, passage 58 has a minor radial flow component and a substantial axial flow component. The intermediate passage 56 has substantially equal axial and radial flow components, whereas the passage 54 has a substantially radial flow component only. In this way, compressor discharge flow into the transition region 18 is more evenly distributed about the impingement sleeve 22 so as to substantially eliminate the previously experienced transition piece temperature variations and impingement sleeve static pressure variations associated with axial diffusers. In fact, tests have confirmed that with the tri-passage diffuser of this invention, there is no negative pressure along the entire length of the transition piece region 18 and that both pressure and temperature distributions along the length of the transition piece 10, and impingement sleeve 22 are relatively uniform.

It should also be noted that with the diffuser construction described herein, both the rotor length and overall turbine length can be shortened, thus providing overall increased turbine performance at reduced cost.

## Claims

1. A compressor discharge diffuser (28) for directing flow from a compressor directly towards a transition piece (10) between a combustor and a turbine stage (14) in a gas turbine wherein the compressor discharge diffuser (28) comprises:
an internal casing defining a pair of outer diffuser walls (30, 32) flaring outwardly in a direction of compressor discharge air flow; **characterised by**
a pair of baffles (34, 36) within a flow area defined by said pair of outer diffuser walls which divide said flow area between said pair of outer diffuser walls (30, 32) into three discrete flow passages (54, 56, 58), one of said three passages diverting the compressor discharge flow substantially radially.

2. The compressor discharge diffuser of claim 1 wherein each flow passage (54, 56, 58) has a substantially identical cross-sectional flow area.

3. The compressor discharge diffuser of claim 1 or 2 wherein one of said three passages (58) diverts compressor discharge flow primarily in an axial direction.

4. The compressor discharge diffuser of any one of claims 1 to 3 wherein one of said three passages (56) diverts compressor discharge flow both axially and radially in substantially equal amounts.

5. A gas turbine including a transition region (18) between a combustor and turbine stage (14) including a transition piece duct (10) extending between a combustor liner (12) and the turbine stage; an impingement sleeve (22) surrounding said transition piece, said impingement sleeve (22) having a plurality of cooling apertures (20) therein; and a compressor discharge diffuser (28) as in any preceding claim directing compressor discharge air into said transition region.

## Patentansprüche

1. Verdichterausgangsdiffusor (28) zum Richten einer Strömung von einem Verdichter direkt zu einem Übergangsstück (10) zwischen einer Brennkammer und einer Turbinenstufe (14) in einer Gasturbine, wobei der Verdichterausgangsdiffusor (28) enthält:
ein Innengehäuse, das zwei äussere Diffusorwände (30, 32) aufweist, die sich nach aussen erweitern in einer Richtung der Verdichterausgangs-Luftströmung, **gekennzeichnet durch**
zwei Leitanordnungen (34, 36) in einem Strömungsbereich, der **durch** die zwei äusseren Diffusorwände gebildet ist, die den Strömungsbereich zwischen den zwei äusseren Diffusorwänden (30, 32) in drei diskrete Strömungskanäle (54, 56, 58) teilen, wobei einer der drei Kanäle die Verdichterausgangsströmung im wesentlichen radial umleitet.

2. Verdichterausgangsdiffusor nach Anspruch 1, wobei jeder Strömungskanal (54, 56, 58) eine im wesentlichen gleiche Strömungsquerschnittsfläche hat.

3. Verdichterausgangsdiffusor nach Anspruch 1 oder 2, wobei einer der drei Kanäle (58) die Verdichterausgangsströmung primär in einer axialen Richtung ableitet.

4. Verdichterausgangsdiffusor nach einem der Ansprüche 1 bis 3, wobei einer der drei Kanäle (56) die Verdichterausgangsströmung sowohl axial als auch radial in im wesentlichen gleich Mengen ableitet.

5. Gasturbine enthaltend einen Übergangsbereich (18) zwischen zwischen einer Brennkammer und einer Turbinenstufe (14) mit einem Übergangsstückkanal (10), der sich zwischen einer Brennkammerauskleidung (12) und der Turbinenstufe erstreckt, eine Prallhülse (22), die das Übergangsstück umgibt, wobei die Prallhülse (22) mehrere Kühllöcher (20) darin aufweist, und einen Verdichterausgangsdiffusor (28) nach einem der vorstehenden Ansprüche zum Richten von Verdichterausgangsluft in den Übergangsbereich.

## Revendications

1. Diffuseur (28) de sortie de compresseur pour diriger le flux provenant d'un compresseur directement vers une pièce de transition (10) entre un dispositif de combustion et un étage de turbine (14) dans une turbine à gaz, le diffuseur (28) de sortie de compresseur comprenant :
un carter interne définissant une paire de parois extérieures de diffuseur (30, 32) s'évasant vers l'extérieur dans une direction de flux d'air de sortie de compresseur ; **caractérisé par**
une paire de chicanes (34, 36) dans une zone de flux définie par ladite paire de parois extérieures de diffuseur qui divise ladite zone de flux comprise entre lesdites deux parois extérieures de diffuseur (30, 32) en trois passages de flux discrets (54, 56, 58), l'un desdits trois passages déviant le flux de sortie de compresseur substantiellement radialement.

2. Diffuseur de sortie de compresseur selon la revendication 1, dans lequel tous les passages de flux (54, 56, 58) ont une section de flux sensiblement identique.

3. Diffuseur de sortie de compresseur selon la revendication 1 ou 2, dans lequel l'un desdits trois passages (58) dévie le flux de sortie de compresseur essentiellement dans une direction axiale.

4. Diffuseur de sortie de compresseur selon l'une quelconque des revendications 1 à 3, dans lequel l'un desdits trois passages (58) dévie le flux de sortie de compresseur à la fois axialement et radialement en quantités sensiblement égales.

5. Turbine à gaz comprenant une région de transition (18) entre un dispositif de combustion et un étage de turbine (14) comprenant un conduit (10) de pièce de transition s'étendant entre une chemise (12) de dispositif de combustion et l'étage de turbine, un manchon d'impact (22) entourant ladite pièce de transition, ledit manchon d'impact (22) comportant une pluralité d'ouvertures de refroidissement (20), et un diffuseur (28) de sortie de compresseur conforme à l'une quelconque des revendications précédentes dirigeant l'air de sortie de compresseur dans ladite région de transition.
